(19) Europäisches Patentamt
European Patent Office
Office européen des brevets

(11) EP 2 281 023 B1

(12) EUROPÄISCHE PATENTSCHRIFT

(45) Veröffentlichungstag und Bekanntmachung des Hinweises auf die Patenterteilung:
**23.04.2014 Patentblatt 2014/17**

(21) Anmeldenummer: **09796352.4**

(22) Anmeldetag: **07.12.2009**

(51) Int Cl.:
*C09J 151/06* (2006.01)

(86) Internationale Anmeldenummer:
**PCT/EP2009/066497**

(87) Internationale Veröffentlichungsnummer:
**WO 2010/072551 (01.07.2010 Gazette 2010/26)**

(54) **HAFTKLEBEMASSE**

PRESSURE-SENSITIVE ADHESIVE MASS

MATIÈRE AUTO-ADHÉSIVE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **15.12.2008 DE 102008061840**

(43) Veröffentlichungstag der Anmeldung:
**09.02.2011 Patentblatt 2011/06**

(73) Patentinhaber: **TESA SE**
**20253 Hamburg (DE)**

(72) Erfinder:
• **HUSEMANN, Marc**
**22559 Hamburg (DE)**
• **KRAWINKEL, Thorsten**
**22457 Hamburg (DE)**
• **KLIER, Daniel**
**21465 Reinbek (DE)**

(56) Entgegenhaltungen:
**EP-A2- 1 211 298      EP-A2- 1 857 515**
**US-A1- 2008 090 036   US-B1- 6 653 408**

## Beschreibung

Die vorliegende Erfindung betrifft die Verwendung einer Haftklebemasse zur Verklebung optischer Bauteile, insbesondere optischer Folien, gemäß Anspruch 1.

Haftklebemassen werden heute sehr vielfältig eingesetzt. So existieren im Industriebereich die verschiedensten Anwendungen. Besonders zahlreich werden Klebebänder basierend auf Haftklebemassen im Elektronikbereich oder im Konsumgüterelektronikbereich eingesetzt. Auf Grund der hohen Stückzahlen lassen sich hier Haftklebebänder sehr schnell und leicht verarbeiten, so dass andere Prozesse, wie z.B. Nieten oder Schweißen, zu aufwändig wären. Neben der normalen Verbindungsfunktion müssen diese Haftklebebänder ggf. noch weitere Funktionen übernehmen. So kann dies z.B. eine thermische Leitfähigkeit, eine elektrische Leitfähigkeit oder auch eine optische Funktion sein. In letzterem Fall werden z.B. Haftklebebänder eingesetzt, die lichtabsorbierende oder lichtreflektierende Funktionen haben. Eine weitere optische Funktion ist beispielsweise eine geeignete Lichttransmission. Hier werden Haftklebebänder und Haftklebemassen eingesetzt, die sehr transparent sind, keine Eigenfärbung aufweisen und auch eine hohe Lichtstabilität besitzen. Anwendungsgebiete sind z.B. die Verklebung von Touch Panels auf einem LCD oder OLED-Display oder die Verklebung von ITO-Filmen (indium tin oxide-Indiumzinnoxid) für kapazitive Touch Panels.

In vielen Fällen hat eine Haftklebemasse für optische Zwecke neben der Verbindungsfunktion die Funktion, Luft auszuschließen, da Luft einen Brechungsindex von 1 aufweist und die optischen Folien oder Gläser einen in der Regel deutlich größeren Brechungsindex aufweisen. Der Unterschied der Brechungsindizes führt beim Übergang von Luft zum optischen Bauteil zu einer Reflektion, die die Transmission reduziert. Ein Weg dieses Problem zu lösen stellen Antireflektivbeschichtungen dar, die den Übergang des Lichtes in das optische Bauteil erleichtern und die Reflektion vermindern. Alternativ oder ergänzend kann auch eine optische Haftklebemasse eingesetzt werden, die einen ähnlichen Brechungsindex wie das optische Bauteil aufweist. Dadurch wird die Reflektion an dem optischen Bauteil deutlich minimiert und die Transmission erhöht. Optische Bauteile, wie Folien oder Gläser, weisen in der Regel einen relativ hohen Brechungsindex auf, so dass Haftklebemassen gefordert sind, die ebenfalls einen hohen Brechungsindex aufweisen. Die meisten optisch zu verklebenden Substrate weisen einen Brechungsindex im Bereich von etwa 1,45 bis etwa 1,70 auf.

Insgesamt sind z.B. eine Vielzahl von Acrylathaftklebemassen bekannt, die sehr unterschiedliche Brechungsindizes aufweisen. In der US 6,703,463 B2 werden Acrylathaftklebemassen beschrieben, die einen Brechungsindex unterhalb von 1,40 aufweisen. Dies wird durch fluorierte Acrylatmonomere erreicht. Der Brechungsindex liegt deutlich unterhalb des geforderten Bereiches. Die JP 2002-363523 A offenbart Acrylathaftklebemassen mit einem Brechungsindex zwischen 1,40 und 1,46. Auch hier werden fluorierte Acrylatmonomere eingesetzt. Der Brechungsindex liegt noch immer deutlich unterhalb des geforderten Bereiches. Kommerziell erhältlich sind zudem Acrylathaftklebebänder, wie z.B. 3M 8141, die einen Brechungsindex im Bereich von 1,47 bis 1,48 aufweisen. Die US 2002/0098352 A1 wiederum beschreibt Acrylathaftklebemassen mit aromatischen Comonomeren. Diese Acrylathaftklebemassen weisen einen Brechungsindex von 1,49 - 1,65 auf. Die EP 1 652 889 A1 beschreibt Haftklebemassenformulierungen für optische Anwendungen, die auf Polydiorganosiloxanen basieren. Silikonverbindungen weisen jedoch in der Regel einen geringen Brechungsindex auf, so dass die beschriebenen Haftklebemassen nicht gut als optische Haftklebemassen geeignet sind.

EP-A-1211298 offenbart die Verwendung von Acrylatcopolymeren mit hohem Brechungsindex für optische Filme.

US-A-2008/090036 offenbart laminierte, transparente Filme mit einer Klebeschicht aus Styrolblockpolymeren, die nicht modifiziert sind aber einen hohen Brechungsindex aufweisen.

EP-A-1857515) offenbart Klebstoffzusammensetzungen, die für Klebebänder zur Maskierung verwendet werden.

Auch US-B-6653408 offenbart Klebstoffzusammensetzungen.

Somit besteht immer noch der Bedarf für eine verbesserte optische Haftklebemasse, die einen hohen Brechungsindex aufweist. Ferner sollte eine derartige optische Haftklebemasse eine hohe Transmission aufweisen sowie eine hohe UV-Stabilität besitzen.

Die vorliegende Erfindung löst das zuvor beschriebene Problem durch die Verwendung einer Klebemasse gemäß Anspruch 1. Bevorzugte Ausgestaltungen und Weiterbildungen sind Gegenstand der jeweiligen Unteransprüche.

Erfindungsgemäß wurde erkannt das ein Gemisch mindestens enthaltend

- ein säureanhydridmodifiziertes Vinylaromatenblockcopolymer,
- ein Metallchelat sowie
- mindestens ein Klebharz

eine geeignete Klebemasse für die Verwendung zur Verklebung optischer Bauteile ergibt. Durch die zuvor genannten Bestandteile kann eine Klebemasse, insbesondere eine Haftklebemasse, erzielt werden, die eine Lichttransmission von mehr als 86 % ermöglicht sowie einen Haze von kleiner 5 % nach ASTM D 1003. Damit eignet sich diese Klebemasse zur Verklebung optischer Bauteile, insbesondere auch zu deren vollflächiger Verklebung.

Zusätzlich zu den zuvor genannten Basis-Bestandteilen kann die erfindungsgemäße Klebemasse auch weitere Bestandteile enthalten. Auch ist es nicht zwingend erforderlich, wenn auch bevorzugt, dass alle enthaltenen Vinylaromatenblockcopolymere säureanhydridmodifiziert sind. Der Anteil der säuremodifizierten Vinylaromatenblockcopolymere sollte jedoch 40 % der Vinylaromatenblockcopolymere nicht unterschreiten.

Die erfindungsgemäße Klebemasse weist insbesondere einen Anteil von mindestens 30 Gew.-%, bevorzugt von mindestens 35 Gew.-% säureanhydridmodifiziertes Vinylaromatenblockcopolymer auf. Dessen Anteil sollte dabei die Schwelle von 70 Gew.-%, bevorzugt von 60 Gew.-% nicht überschreiten.

Der Anteil der Metallchelate an der Klebemasse beträgt bevorzugt 0,01 Gew.-% bis 2 Gew.-%, weiter bevorzugt 0,1 Gew.-% bis 1 Gew.-%. Der Anteil an Klebharz wiederum beträgt bevorzugt 20 Gew.-% bis 70 Gew.-%, weiter bevorzugt 30 Gew.-% bis 60 Gew.-%. Dieser Anteil an Klebharz kann durch ein einzelnes Klebharz erzielt werden; es können jedoch auch Mischungen verschiedener Klebharze verwendet werden.

Bei der Auslegung und Gestaltung optischer Bauteile muss die Wechselwirkung der verwendeten Materialien mit der Art des eingestrahlten Lichts berücksichtigt werden. In einer abgeleiteten Version nimmt der Energieerhaltungssatz folgende Form an:

$$T(\lambda) + p(\lambda) + a(\lambda) = 1$$

$$(1)$$

mit

$T(\lambda)$ = Anteil des transmittierten Lichts
$p(\lambda)$ = Anteil des reflektierten Lichts
$a(\lambda)$ = Anteil des absorbierten Lichts beschreibt
$\lambda$ = Wellenlänge,

wobei die Gesamtintensität des eingestrahlten Lichts auf 1 normiert ist.

Je nach Anwendung des optischen Bauteils gilt es, einzelne dieser drei Terme aus Formel (1) zu optimieren und die jeweils anderen zu unterdrücken. Optische Bauteile, die für die Transmission ausgelegt werden, sollten Werte für die Transmission $T(\lambda)$ aufweisen, die nahe bei 1 liegen. Dies wird dann erreicht, wenn der Anteil des reflektierten Lichtes $p(\lambda)$ sowie der Anteil des absorbierten Lichtes $a(\lambda)$ im Betrag möglichst reduziert ist. Haftklebemassen auf Synthesekautschukbasis weisen normalerweise keine nennenswerte Absorption im sichtbaren Bereich auf, d. h. im Wellenlängenbereich zwischen 400 nm und 700 nm. Dies kann leicht durch Messungen mit einem UV-Vis Spektralphotometer überprüft werden. Von entscheidendem Interesse ist daher $p(\lambda)$. Reflexion ist ein Grenzflächenphänomen, das von den Brechungsindizes $n_{d,i}$ von zwei in Kontakt tretenden Phasen i nach der Fresnel-Gleichung abhängt:

$$\rho(\lambda) = \left( \frac{n_{d,2} - n_{d,1}}{n_{d,2} + n_{d,1}} \right)^2$$

$$(2)$$

Für den Fall isorefraktiver Materialien, für die $n_{d,2} = n_{d,1}$ gilt, wird $p(\lambda) = 0$. Dies erklärt die Notwendigkeit, den Brechungsindex einer für optische Bauteile zu verwendenden Haftklebemasse denjenigen der zu verklebenden Materialien anzupassen. Typische Werte für den Brechungsindex verschiedener für optische Bauteile verwendeter Materialien sind in Tabelle 1 aufgeführt.

| Tabelle 1 | |
|---|---|
| Material | Brechungsindex $n_d$ |
| Quarzglas | 1,458 |
| Borkron (BK7) | 1,514 |
| Borkron | 1,518 |

(fortgesetzt)

| Tabelle 1 | |
|---|---|
| Material | Brechungsindex $n_d$ |
| Flint | 1,620 |
| (Quelle: Pedrotti, Pedrotti, Bausch, Schmidt, Optik, 1996, Prentice-Hall, München. Daten bei X = 588 nm) | |

**Klebemasse**

Wie bereits zuvor beschrieben wurde, basiert die Klebemasse, insbesondere als Haftklebemasse, auf einem Gemisch aus säureanhydridmodifizierten Vinylaromatenblockcopolymer, Metallchelat und mindestens einem Klebharz.

Die Klebemasse weist als säureanhydridmodifizierte Vinylaromatenblockcoplymer bevorzugt solche auf Basis von Blockcopolymeren enthaltend Polymerblöcke gebildet von Vinylaromaten (A-Blöcke) und mindestens einem der folgenden B-Blöcke:

1. Blöcken aus Polymerisation von 1,3-Dienen
2. Blöcken aus Polyisopren
3. Blöcken aus Gemischen aus 1,3-Dienen und Vinylaromaten, wobei der Vinylaromatenanteil in den B-Blöcken 50% nicht übersteigt
4. Mischungen aus 1,3-Dienen und Polyisobutylen.

Sowohl Homo- als auch Copolymerblöcke sind erfindungsgemäß nutzbar. Resultierende Blockcopolymere können gleiche oder unterschiedliche B-Blöcke enthalten. Vorzugsweise sind die Blockcopolymere teilweise, selektiv oder vollständig hydriert. Blockcopolymere können lineare A-B-A Struktur aufweisen. Einsetzbar sind ebenfalls Blockcopolymere von radialer Gestalt sowie sternförmige und lineare Multiblockcopolymere. Als weitere Komponenten können A-B Zweiblockcopolymere vorhanden sein. Sämtliche der vorgenannten Polymere können alleine oder im Gemisch miteinander genutzt werden. Durch den Vinylaromatenanteil der bei den eingesetzten Blockcopolymeren zwischen 10 und 50 Gew.% liegt, kann der Brechungsindex der Haftklebemasse gesteuert werden. So steigt mit ansteigendem Aromatenanteil der Brechungsindex an.

Zumindest ein Teil der eingesetzten Blockcopolymere ist säure- oder säureanhydridmodifiziert, wobei die Modifizierung hauptsächlich durch radikalische Pfropfcopolymerisation von ungesättigten Mono- und Polycarbonsäurenanhydriden, wie z.B. Maleinsäureanhydrid, Itaconsäureanhydrid oder Citraconsäureanhydrid, bevorzugt Maleinsäureanhydrid erfolgt. Bevorzugt liegt der Anteil des Säureanhydrid zwischen 0,5 Gew.% und 4 Gew.-% bezogen auf das gesamte Blockcopolymer. Bei einem Anteil von weniger als 0,5 Gew.% ist ein hinreichender Effekt nicht sicher gewährleistet, ein höherer Anteil als 4 Gew,-% kann nicht ohne weiteres aufgepfropft werden.

Kommerziell sind solche Blockcopolymere z.B. unter dem Namen Kraton FG 1901 und Kraton FG 1924 der Firma Kraton, bzw. Tuftec M 1913 und Tuftec M 1943 der Fa. Asahi erhältlich.

Die Klebemasse, insbesondere als Haftklebemasse, weist vorzugsweise einen Anteil von 20 bis 70 Gew.% von Vinylaromatenblockcopolymer auf, vorzugsweise von 30 bis 60 Gew.-%, und besonders bevorzugt von 35 bis 55 Gew.-%. Dabei muss nicht der gesamte Anteil an Blockcopolymeren anhydrid- bzw. säuremodifiziert vorliegen. Ist der elastomere Anteil höher oder niedriger, ist die Klebemasse nicht in jedem Fall haftklebrig.

Neben den schon genannten säureanhydridmodifizierten Vinylaromatenblockcopolymeren können auch weitere Säureanhydride zugesetzt werden, um einen höheren Vernetzungsgrad und damit eine weiter verbesserte Kohäsion zu erreichen. Dabei sind sowohl monomere Säureanhydride, wie beispielsweise in US 3,970,608 A beschrieben, einsetzbar als auch säureanhydridmodifizierte Polymere und/oder säureanhydridenthaltende Copolymere wie Polyvinylmethylethermaleinsäureanhydrid-Copolymere, z.B. zu beziehen unter dem Namen Gantrez, vertrieben von der Firma ISP.

Als Klebrigmacher nutzt die beschriebene Klebemasse, insbesondere die Haftklebemasse, als Hauptkomponente insbesondere Klebharze, die mit dem Elastomerblock der Vinylaromatenblockcopolymere verträglich sind. Der Anteil dieser verträglichen Harze sollte mindestens 50 Gew.% der Klebharze insgesamt ausmachen. Bevorzugt geeignet sind u. a. nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C-5, C-5/C-9 oder C-9 Monomerströmen, Polyterpenharze auf Basis von α-Pinen und/oder ß-Pinen und/oder δ-Limonen, hydrierte Polymerisate von bevorzugt reinen C-8 und C-9 Aromaten. Vorgenannte Klebharze können sowohl allein als auch im Gemisch eingesetzt werden. Für den Einsatz im optischen Bereich werden insbesonders solche Harze eingesetzt, die besonders farblos sind, d.h. vorzugsweise eine Gardnerzahl kleiner 2 aufweisen, idealerweise hydrierte Kohlenwasserstoffharze auf Basis von C5, C5/C9 oder C9. Die Gardnerzahl wird 50%ig in Toluol bestimmt.

Die (Haft-)Klebemasse kann zudem eine Vielzahl weiterer Abmischkomponenten zur Einstellung spezieller Eigenschaften enthalten. Als weitere Additive können typischerweise genutzt werden:

- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Endblockverstärkerharze
- Füllstoffe, wie zum Beispiel Siliziumdioxid, Glas (gemahlen oder in Form von Kugeln), Aluminiumoxide oder Zinkoxide, wobei die Füllstoffe so klein gemahlen sind, dass Sie optisch nicht sichtbar sind
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, $\alpha$-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen.
- Plastifizierungsmittel, wie zum Beispiel Flüssigharze, Weichmacheröle oder niedermolekulare flüssige Polymere, wie zum Beispiel niedermolekulare Polybutene mit Molmassen < 1500 g/mol (Zahlenmittel)

Bei der Klebemasse kann es sich um eine solche handeln, die bereits haftklebrig vorliegt, d.h. keiner weiteren Aktivierung bedarf. Optional kann aber auch vorgesehen sein, dass die Haftklebrigkeit der Klebemasse erst durch eine Aktivierung, wie eine thermische Aktivierung oder eine Lösemittelaktivierung, hervorgerufen wird. Die Abstimmung der Haftklebrigkeit ist insbesondere abhängig vom Anteil an Klebharzen sowie dem Elastomer-Harz-Verhältnis.

Bei den Metallen der Metallchelate handelt es sich um solche der 2., 3., 4. und/oder 5. Hauptgruppe des Periodensystems und/oder der Übergangsmetalle. Besonders geeignet sind Aluminium, Zinn, Titan, Zirkonium, Hafnium, Vanadium, Niob, Chrom, Mangan, Eisen, Kobalt, und Cer. Besonders bevorzugt ist Aluminium.

Die Metallchelate werden durch die folgende Formel wiedergegeben:

$$(R_1O)_n \, M \, (XR_2Y)_m \qquad (3)$$

wobei

M ein Metall wie oben beschrieben ist,
$R_1$ eine Alkyl- oder Arylgruppe ist, insbesondere Methyl, Ethyl, Butyl, Isopropyl oder Benzyl,
n Null oder eine ganze Zahl größer Null ist ($n \geq 0$),
X Sauerstoff oder Stickstoff ist,
Y Sauerstoff oder Stickstoff ist,

wobei auch X = Y möglich ist und
wobei X und/oder Y durch eine Doppelbindung an $R_2$ gebunden sein kann;

$R_2$ eine X und Y verbindende Alkylengruppe ist,

wobei die Alkylengruppe verzweigt sein kann, oder auch Sauerstoff und/oder weitere Heteroatome in der Kette enthalten kann;

m eine ganze Zahl, mindestens jedoch 1 ist ($m \geq 1$).

Bevorzugte Chelatliganden (also entsprechend der folgenden Formel: $(XR_2Y)_m$) sind solche, die aus der Reaktion folgender Verbindungen entstanden sind: Triethanolamin, 2,4-Pentandion, 2-Ethyl-1,3-Hexandiol oder Milchsäure. Besonders bevorzugte Vernetzer sind Aluminiumacetylacetonate.

Dabei sollte ein annähernd äquivalentes Verhältnis zwischen den Säureanhydridgruppen des Elastomers, also des säureanhydridmodifizierten Vinylaromatenblockcoplymers, und den Acetylacetonatgruppen des Metallchelats gewählt werden, um eine optimale Vernetzung zu erreichen, wobei sich ein kleiner Überschuss an Vernetzer als positiv herausgestellt hat. Eine Komplexbindung zwischen den Säureanhydridgruppen und den Acetylacetonatgruppen führt zu der gewünschten Vernetzung. Das Verhältnis zwischen Anhydridgruppen und Acetylacetonatgruppen kann aber auch variiert werden, dabei sollte für eine ausreichende Vernetzung jedoch keine der beiden Gruppen in mehr als einem fünffachen molaren Überschuss vorliegen.

Durch die Vernetzung mit den Metallchelaten erweichen die Blockcopolymermassen nicht schon bei relativ moderaten Temperaturen, sondern überstehen auch unverändert die üblichen Prozesse bis zu 85°C Wechselklimatemperatur. Als Wechselklimatemperatur wird vorliegend ein wiederholt auftretender Wechsel der Temperatur bezeichnet, insbesondere in einem Temperaturbereich von -40°C bis 85°C.

Eine weitere Anforderung besteht an eine (Haft-)Klebemasse für optische Zwecke in deren Neutralität, also einen pH-Wert von zwischen pH 6 und pH 8. So sollte eine optische Klebemasse keine Säurefunktionen enthalten, die z.B. bei Kontakt mit ITO Filmen die elektrische Leitfähigkeit über einen längeren Zeitraum negativ beeinflussen können. Überraschenderweise hat sich gerade die zuvor beschriebene (Haft-)Klebemasse als geeignet erwiesen, die elektrische Leitfähigkeit nicht übermäßig zu stören, obwohl diese Säurefunktionen enthält. Die Klebemasse verhält sich bei der Verklebung auf elektrisch leitfähigen Substraten inert. Die Klebemasse kann daher insbesondere auch zur Verklebung von ITO Folien in Touch Panels eingesetzt werden. Ihr pH-Wert liegt insbesondere im Bereich von pH 6 bis pH 8.

Wie bereits zuvor erläutert wurde, bestehen an optische Klebemassen besondere Anforderungen im Hinblick auf deren Lichtstabilität. Um diesen Anforderungen gerecht zu werden, werden der (Haft-)Klebemasse insbesondere Lichtschutzmittel zugegeben. Die Zugabe von Lichtschutzmitteln erfolgt insbesondere zu einem Anteil von 0,1 Gew.% bis 2 Gew-%.

Als Lichtschutzmittel werden bevorzugt substituierte Triazine gewählt. Die Triazine werden dermaßen gewählt, dass sie eine gute Verträglichkeit mit den Synthesekautschukklebemassen aufweisen. Dies wird z.B. durch Substituenten erreicht. So weisen bevorzugte Ausführungsformen der Triazine mindestens einen aromatischen Substituenten auf. Bevorzugt kommen Triazine mit genau 2 aromatische Substituenten, äußerst bevorzugt mit genau 3 aromatische Substituenten zum Einsatz. Diese Aromaten können selbst wiederum mit mindestes einem aliphatischen Substituenten substituiert sein. In der einfachsten Form kann dies eine Methylgruppe sein. Es sind aber auch andere Substituenten einsetzbar, wie Hydroxygruppen, Ethergruppen, aliphatische Ketten mit 2 bis 20 C-Atomen, die linear, verzweigt oder zyklisch vorliegen und auch 1 bis 5 O-Atome in Form von Ethergruppen, Hydroxygruppen, Estergruppen, Carbonatgruppen enthalten können. Beispiele für substituierte Triazine kommerzieller Natur sind von der Firma Ciba unter dem Markennamen Tinuvin® erhältlich. So sind z.B. Tinuvin® 400, Tinuvin® 405, Tinuvin® 479 und Tinuvin® 477 geeignete Triazine, die eingesetzt werden können.

Als Lichtschutzmittel können alternativ oder ergänzend zu den Triazinen sterisch gehinderte Amine eingesetzt werden. Besonders bevorzugt werden substituierte N-Methylpiperidin-Derivate eingesetzt. Diese sind beispielsweise in Position 1 und in Position 5 sterisch gehindert durch aliphatische Gruppen, wie z.B. Methylgruppen. Besonders bevorzugt werden vier Methylgruppen zur sterischen Hinderung eingesetzt. Um eine gute Löslichkeit mit den Synthesekautschuklebemassen zu erreichen sowie um die Verdampfungstemperatur zu erhöhen, werden lange aliphatische Substituenten eingesetzt. Die Substituenten können linear, zyklisch oder verzweigt sein. Sie können bis zu 20 C-Atome enthalten und/oder bis zu 8 O-Atome enthalten, beispielsweise in Form von Estergruppen, Ethergruppen, Carbonatgruppen oder Hydroxygruppen. Für die Wirkung können Verbindungen mit nur einer N-Methylpiperidingruppe eingesetzt werden. Es sind aber auch dimere N-Methylpiperidin Derivate bekannt, die eine Lichtschutzfunktion haben. Diese können auch mit den monomeren Verbindungen kombiniert werden.

Als Alterungsschutzmittel werden bevorzugt sterisch gehinderte Phenole eingesetzt. Sterisch gehinderte Phenole weisen in einer bevorzugten Ausführungsform in beiden ortho-Stellungen zur Hydroxygruppe tert-Butylgruppen auf. Damit eine gute Löslichkeit und eine hohe Verdampfungstemperatur erreicht werden können, sollten die sterisch gehinderten Phenole noch zusätzlich substituiert sein. Die Substituenten können linear, zyklisch oder verzweigt sein. Sie können bis zu 20 C-Atome und/oder bis zu 8 O-Atome enthalten, beispielsweise in Form von Estergruppen, Ethergruppen, Carbonatgruppen oder Hydroxygruppen. Kommerziell erhältliche Verbindungen sind z.B. Irganox® 1135 oder Irganox® 1330 von der Firma Ciba. Der Anteil an Alterungsschutzmitteln beträgt bevorzugt 0,1 Gew.% bis 2 Gew.-%.

Als besonders vorteilhaft hat sich die Kombination aus substituierten Phenolen und aromatisch substituierten Phosphiten herausgestellt. Die substituierten Phenolen sollten bevorzugt zumindest zweifach substituiert sein und in beiden Substituenten zumindest ein Schwefelatom enthalten. Kommerzielle Beispiele für S-haltige sterisch gehinderte Phenole sind Irganox® 1520 oder Irganox® 1726 der Firma Ciba. Kommerzielle Beispiele für aromatisch substituierte Phosphite sind Irgafos® 168, Irgafos® 126, Irgafos® 38, Irgafos® P-EPQ oder Irgafos® 12 der Firma Ciba.

Weitere Einzelheiten, Ziele, Merkmale und Vorteile der vorliegenden Erfindung werden nachfolgend anhand bevorzugter Ausführungsbeispiele näher erläutert. In der Zeichnung zeigt

Fig. 1     ein einseitiges Haftklebeband,

Fig. 2     ein beidseitiges Haftklebeband,

Fig. 3    ein trägerfreies Haftklebeband (transfer tape),

Fig. 4    die Verklebung einer Rückseitenverstärkungsplatte eines Touch Panels,

Fig. 5    die Verklebung verschiedener Schichten eines Touch Panels.

**Produktaufbau**

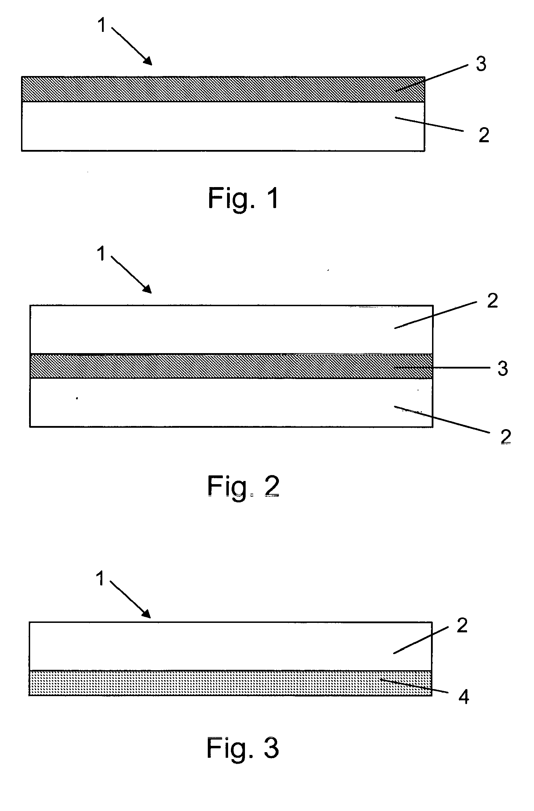

Fig. 1 zeigt ein einseitig klebendes Haftklebeband 1 zur Verwendung bei der Verklebung von optischen Bauteilen, insbesondere von optischen Folien. Das Haftklebeband 1 weist eine Klebeschicht 2 auf, die durch Beschichtung einer Haftklebemasse auf einen Träger 3 hergestellt wurde. Der Haftklebemassenauftrag beträgt bevorzugt zwischen 5 und 250 g/m$^2$. Bei der Haftklebemasse handelt es sich um eine solche, gebildet aus säureanhydridmodifizierten Vinylaromatenblockcopolymeren, Metallchelat und einem Klebharz, wie sie zuvor beschrieben wurde. Die Haftklebemasse weist insbesondere im sichtbaren Bereich des Lichtes einen Transmissionsgrad von mindestens 86 % auf, wodurch sie für die optische Anwendung besonders geeignet ist.

Für die Anwendung bei der Verklebung von optischen Bauteilen kommt auch als Träger 2 ein transparenter Träger 2 zum Einsatz. Der Träger 2 ist also ebenfalls im Bereich des sichtbaren Lichtes transparent, weist bevorzugt also einen Transmissionsgrad von ebenfalls mindestens 86 % auf.

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

Die transparente Haftklebemasse kann bevorzugt mit einer Trennfolie geschützt werden. Des Weiteren ist es möglich, dass die Trägerfolie mit einer oder mehreren Beschichtungen versehen ist. Der Haftklebemassenauftrag beträgt bevorzugt zwischen 5 und 250 g/m$^2$.

Der in Fig. 2 dargestellte Produktaufbau zeigt ein Haftklebeband 1 mit einem transparenten Träger 3, der beidseitig mit einer Haftklebemasse beschichtet ist und somit zwei Klebeschichten 2 aufweist. Der Haftklebemassenauftrag je Seite beträgt wiederum bevorzugt zwischen 5 und 250 g/m$^2$.

Auch bei dieser Ausgestaltung wird bevorzugt zumindest eine Klebeschicht 2 mit einer Trennfolie abgedeckt. Bei einem aufgerollten Klebeband kann diese eine Trennfolie ggf. auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der erfinderischen Haftklebemasse ausgestattet sein und auf der anderen Seite eine andere transparente Haftklebemasse eingesetzt werden.

Der in Fig. 3 dargestellte Produktaufbau zeigt ein Haftklebeband 1 in Form eines transfer tapes, d.h. ein trägerfreies Haftklebeband 1. Hierzu wird die Haftklebemasse einseitig auf eine Trennfolie 4 beschichtet und bildet so eine Haftklebeschicht 2 aus. Der Haftklebemassenauftrag beträgt bevorzugt zwischen 5 und 250 g/m$^2$. Ggf. wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dgl. eingesetzt werden. In diesem Fall sollte die Oberflächenrauhigkeit des Trennpapiers aber reduziert sein, um eine möglichst glatte Haftklebemassenseite zu realisieren.

**Trägerfolien**

Als Trägerfolien können eine Vielzahl von hochtransparenten Polymerfolien eingesetzt werden. Insbesondere spezielle hochtransparente PET Folien können eingesetzt werden. So eignen sich z.B. Folien der Firma Mitsubishi mit dem Handelsnamen Hostaphan™ oder der Firma Toray mit dem Handelsnamen Lumirror™. Der Haze-Wert, ein Maß für die Eintrübung einer Substanz, sollte in einer bevorzugten Auslegung einen Wert von kleiner 5 % nach ASTM D 1003 aufweisen. Ein hoher Haze-Wert bedeutet eine geringe Sichtbarkeit durch die entsprechende Substanz hindurch. Die Lichttransmission liegt bevorzugt bei 550 nm bei größer 86 %, besonders bevorzugt bei größer 88 %. Eine weitere sehr bevorzugte Spezies der Polyester stellen die Polybutylenterephthalat Folien dar.

Neben Polyesterfolien lassen sich auch hochtransparente PVC-Folien einsetzen. Diese Folien können Weichmacher enthalten, um die Flexibilität zu erhöhen. Weiterhin können PC, PMMA und PS Folien eingesetzt werden. Neben reinem Polystyrol lassen sich zur Verringerung der Kristallisationsneigung neben Styrol auch andere Comonomere, wie z.B. Butadien, einsetzen.

Weiterhin können Polyethersulfon- und Polysulfon-Filme als Trägermaterialien eingesetzt werden. Diese sind z.B. von der Firma BASF unter dem Tradenamen Ultrason™ E und Ultrason™ S zu beziehen. Ferner können auch besonders bevorzugt hochtransparente TPU-Folien eingesetzt werden. Diese sind z.B.. kommerziell erhältlich von der Firma Elastogran GmbH. Es können auch hochtransparente Polyamid- und Copolyamid-Folien verwendet werden sowie Folien auf Basis von Polyvinylalkohol und Polyvinylbutyral. Neben einschichtigen Folien können auch mehrschichtige Folien verwendet werden, die z.B. coextrudiert hergestellt werden. Hierfür können die zuvor genannten Polymermaterialien miteinander kombiniert werden.

Ferner können die Folien behandelt sein. So können z.B. Bedampfungen vorgenommen sein, beispielsweise mit Zinkoxid, oder es können Lacke oder Haftvermittler aufgetragen sein. Eine weitere mögliche Additivierung stellen UV-Schutzmittel dar, die als Additive in der Folie vorliegen können oder als Schutzschicht aufgebracht sein können.

Die Foliendicke beträgt in einer bevorzugten Auslegung zwischen 4 $\mu$m und 150 $\mu$m, besonders bevorzugt zwischen 12 $\mu$m und 100 $\mu$m.

Die Trägerfolie kann beispielsweise auch eine optische Beschichtung aufweisen. Als optische Beschichtung eignen sich insbesondere Beschichtungen, die die Reflektion verringern. Dies wird beispielsweise durch eine Absenkung der Brechungsindexdifferenz für den Übergang Luft / optische Beschichtung erreicht.

Generell kann zwischen Single- und Multi-Layer Beschichtungen unterschieden werden. Im einfachsten Fall wird $MgF_2$ als Single-Layer zur Minimierung der Reflektion eingesetzt. $MgF_2$ weist einen Brechungsindex von 1.35 bei 550 nm auf. Weiterhin lassen sich z.B. Metalloxid Schichten in verschiedenen Schichten zur Minimierung der Reflektion einsetzen. Typische Beispiele sind Schichten aus $SiO_2$ und $TiO_2$. Weitere geeignete Oxide sind z.B. Hafniumoxid ($HfO_2$), Magnesiumoxid (MgO), Siliziummonoxid (SiO), Zirkonoxid ($ZrO_2$) und Tantaloxid ($Ta_2O_5$). Weiterhin können Nitride eingesetzt werden, wie z.B. $SiN_X$. Des Weiteren kann fluoriertes Polymer als Schicht mit geringem Brechungsindex eingesetzt werden. Diese werden auch sehr häufig in Kombination mit den zuvor genannten Schichten aus $SiO_2$ und $TiO_2$ eingesetzt. Ferner können Sol-Gel-Prozesse eingesetzt werden. Hier werden z.B. Silikone, Alkoxide und/oder Metallalkoxide als Mischungen eingesetzt und es wird mit diesen Mischungen beschichtet. Siloxane sind somit auch eine weit verbreite Basis für reflektionsmindernde Schichten.

Die typischen Beschichtungsdicken liegen zwischen 2 Å und 1000 Å, bevorzugt zwischen 100 Å und 500 Å. Zum Teil treten - je nach Schichtdicke und chemischer Zusammensetzung der einzelnen oder der mehreren optischen Schichten-Farbveränderungen auf, die wiederum durch die Dicke der Beschichtung gesteuert bzw. verändert werden können. Für den aus Lösung beschichteten Siloxan-Prozess, können auch Schichtdicken von größer 1000 Å erzielt werden.

Eine weitere Möglichkeit zu Verringerung der Reflektion besteht in der Erzeugung von bestimmten Oberflächenstrukturen. So besteht die Möglichkeit der porösen Beschichtung und der Erzeugung von stochastischen oder periodischen Oberflächenstrukturen. Dabei sollte der Abstand zwischen den Strukturen deutlich keiner sein als der Wellenlängenbereich des sichtbaren Lichtes.

Neben dem bereits erwähnten Prozess der Lösungsmittelbeschichtung können die optischen Schichten beispielsweise durch Vakuum-Beschichtungsverfahren, wie z.B. CVD (Chemical Vapor Deposition) oder PIAD (Plasma-Ion assisted Deposition), aufgetragen werden.

### Trennfolie

Zum Schutz der offenen (Haft-)Klebemasse wird diese bevorzugt mit einer oder mehreren Trennfolien abgedeckt. Neben den Trennfolien können - auch wenn nicht sehr bevorzugt - Trennpapiere eingesetzt werden, wie z.B. Glassine-, HDPE- oder LDPE-Trennpapiere, die in einer Auslegung eine Silikonisierung als Trennlage aufweisen.

Bevorzugt wird jedoch eine Trennfolie eingesetzt. Die Trennfolie besitzt in einer sehr bevorzugten Auslegung eine Silikonisierung als Trennmittel. Des Weiteren sollte der Folientrennliner eine extrem glatte Oberfläche besitzen, so dass keine Strukturierung der Haftklebemasse durch den Trennliner vorgenommen wird. Dies wird bevorzugt erreicht, durch die Verwendung von antiblockmittelfreien PET-Folien in Kombination von Silikonsystemen, die aus Lösung beschichtet wurden.

### Beschichtung

Die (Haft-)Klebemassen können aus Lösung oder aus der Schmelze beschichtet werden. Für die Beschichtung aus Lösung wird die (Haft-)Klebemasse in gängigen Lösungsmitteln, wie z.B. Toluol, Benzin, Isopropanol, etc. gelöst und dann über eine Beschichtungsdüse oder ein Rakel beschichtet. Besonders bevorzugt ist die Fertigung der (Haft-)Klebemassen aus der Lösung, um eine zu frühe Vernetzung zu verhindern. Es können aber auch alle anderen Beschichtungsverfahren eingesetzt werden, die lösungsmittelhaltige Beschichtungen zulassen.

Des Weiteren kann auch aus der Schmelze beschichtet werden. Hier wird z.B. die (Haft-)Klebemasse in einem Kneter oder Doppelschneckenextruder abgemischt, mit allen Komponenten vermischt und anschließend z.B. mit einer Extrusionsdüse oder einer Schmelzdüse beschichtet.

**Verwendung**

Die zuvor beschriebenen (Haft-)Klebemassen und (Haft)-Klebebänder eignen sich insbesondere zur Verwendung in optischen Anwendungen, wobei bevorzugt permanente Verklebungen mit Verweilzeiten von größer einem Monat vorgenommen werden.

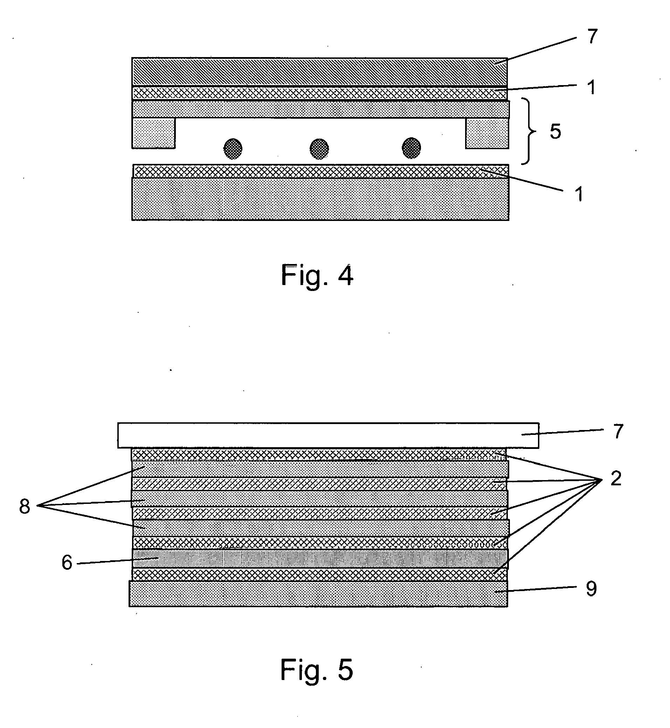

Ein besonders bevorzugtes Einsatzgebiet umfasst die Verklebung von Touch Panels sowie die Herstellung von Touch Panels. In Fig. 4 sind typische Verklebungen in resistiven Touch Panels dargestellt. Hierfür werden bevorzugt Transfer-(Haft)-Klebebänder, also solche ohne Träger, eingesetzt. Topfilm oder Versteifungsplatte können aber auch in Form eines einseitigen (Haft-)Klebebandes mit dem entsprechenden Träger eingesetzt und verklebt werden.

Fig. 4 zeigt ein Touch Panel 5, das mittels eines ersten Haftklebebandes 1 auf einem Substrat 6, beispielsweise einer Plastikplatte oder einer Glasplatte verklebt ist. Auf das Touch Panel 5 ist dann mittels eines zweiten Haftklebebandes 1 ein Topfilm 7 aufgebracht, der üblicherweise eine Antikratzschicht aufweist.

In Fig. 5 sind typische Verklebungen für kapazitive Touch Panels dargestellt. Insbesondere für die Verklebung strukturierter ITO-Filme 8 werden Haftklebeschichten 2 mit Klebemassenaufträgen größer 50 g/m$^2$ eingesetzt, damit eine gute Benetzung der Strukturierung erreicht wird.

In Fig. 5 ist ferner die Verklebung eines Schutzfilmes oder eines Mobilfunktelefonfensters 7, eines Substrats 6 als Rückseitenverstärkungsplattes eines kapazitiven Touch Panels sowie eines Displays 9 mit der beschriebenen Haftklebemasse gezeigt. Dabei können sowohl die Haftklebemasse an sich als auch diese in Form eines transfer-Klebebandes, als einseitiges oder auch als doppelseitiges Haftklebeband mit Trägerfolie eingesetzt werden.

Prüfmethoden

A. Brechungsindex

Der Brechungsindex der Haftklebemasse wurde in einem 25 μm dicken Film mit dem Optronic Meßgerät der Fa. Krüss bei 25 °C und weißem Licht ($\lambda$ = 550 nm $\pm$ 150 nm) nach dem Abbeschen Prinzip gemessen. Zur Temperaturstabilisierung wurde das Gerät in Verbindung mit einem Thermostaten der Fa. Lauda betrieben.

B. Klebkraft

Die Prüfung der Schälfestigkeit (Klebkraft) erfolgte gemäß PSTC-101. Das Klebeband wird auf eine Glasplatte aufgebracht. Ein 2 cm breiter Streifen des Klebebandes wird durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Die Kraft wird in N/cm angegeben.

C. Transmission

Die Bestimmung der Transmission bei 550 nm erfolgt nach ASTM D1003. Vermessen wurde der Verbund aus optisch transparenter Haftklebemasse und Glasplatte.

D. Haze

Die Bestimmung des Haze erfolgt nach ASTM D1003.

E. Lichtbeständigkeit

Der Verbund aus Haftklebemasse und Glasplatte wird in der Größe 4 x 20 cm$^2$ für 250 h mit Osram Ultra Vitalux 300 W Lampen in einem Abstand von 50 cm bestrahlt. Nach der Bestrahlung wird nach Prüfmethode C die Transmission bestimmt.

F. Wechselklimatest

Die Haftklebemasse wird als einseitiges Haftklebeband (50 g/m$^2$ Masseauftrag, 50 μm PET Folie vom Typ Mitsubishi RNK 50) luftblasenfrei auf eine Glasplatte verklebt. Der Prüfstreifen besitzt die Dimension 2 cm Breite und 10 cm Länge. Es wird nach Prüfmethode B die Klebkraft auf Glas bestimmt.

Parallel wird ein derartiger Klebeverbund in einem Wechselklimaschrank platziert und für 1000 Zyklen gelagert. Ein Zyklus umfasst:

- die Lagerung bei -40°C für 30 Minuten
- Hochheizen innerhalb von 5 Minuten auf 85°C
- Die Lagerung bei 85°C für 30 Minuten
- Das Abkühlen auf -40°C innerhalb von 5 Minuten

Nach Klimawechseltest wird wiederum die Klebkraft nach Prüfmethode B bestimmt.

G. Test zur elektrischen Leitfähigkeit

Die Haftklebemasse wird als einseitiges Haftklebeband auf einem ITO-Film (Elecrysta®) der Firma Nitto Denko verklebt. Der ITO-Film hat die Dimension 12 cm x 2 cm. Die Verklebungsfläche beträgt 10 cm x 2 cm, so dass an jedem Ende noch jeweils 1 cm für elektrische Messungen frei bleibt. Anschließend wird der Verbund in einem Klimaschrank für 500 h bei 85°C und 20 % Luftfeuchtigkeit gelagert. Es wird dann der Oberflächenwiderstand nach DIN 53482 gemessen. Anschließend wird der prozentuale Abfall im Vergleich zu unbehandelter ITÖ-Folie bestimmt.

**Beispiele**

Die Beschichtungen erfolgten in den Beispielen auf einer üblichen Laborbeschichtungsanlage für kontinuierliche Beschichtungen. Die Beschichtung wurde in einem Reinraum ISO 5 nach Norm ISO 14644-1 vorgenommen. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120°C frei wählbar.

*Herstellung der Muster:*

Die Bestandteile werden in einer Mischung aus Toluol / Benzin / Isopropanol 40:40:20 (Angabe in Gew.-%) gelöst, so dass ein Feststoffgehalt von 40% entsteht. Kurz vor der Beschichtung wird dann das Metallchelat, gelöst 10% in Toluol, zugegeben und durch Rühren homogen verteilt. Die Muster werden dann auf einer 23 $\mu$m dicken PET-Folie so ausgestrichen und bei 110°C getrocknet, dass ein Flächengewicht von 50g/m$^2$ Klebmasse verbleibt.

Die genaue Zusammensetzung der Beispiele ergibt sich aus der nachfolgenden Tabelle 1 (Angaben in Gewichtsanteilen).

| Tabelle1 | | | | |
|---|---|---|---|---|
| | 1 | 2 | 3 | Referenz 4 |
| Kraton FG 1901 | 100 | 40 | 40 | |
| Kraton FG 1924 | | 60 | 60 | |
| Kraton G 1652 | | | | 100 |
| Regalite R 1100 | 100 | 100 | | 100 |
| Escorez 5600 | | | 120 | |
| Shellflex 371 | 20 | 20 | | 20 |
| Kristalex 1140 | | 10 | | |
| Aluminium-acetylacetonat | 1 | 1 | 1 | |

Eigenschaften der eingesetzten Rohstoffe:

Kraton® FG 1901      SEBS (Styrol-Ethylen/Butylen-Styrol-Blockcopolymer), 100% Dreiblock, Blockpolystyrolgehalt: 30 Gew.%, mit ca. 2% Maleinsäureanhydrid modifiziert, Kraton Polymers

Kraton® FG 1924      SEBS (Styrol-Ethylen/Butylen-Styrol-Blockcopolymer), ca. 41 Gew.% Zweiblock, Blockpolystyrolgehalt: 13 Gew.%, mit ca. 1,3% Maleinsäureanhydrid modifiziert Kraton Polymers

Kraton® G 1652    SEBS (Styrol-Ethylen/Butylen-Styrol-Blockcopolymer), 100% Dreiblock, Blockpolystyrolgehalt: 30 Gew.%, ohne Säuremodifizierung, Kraton Polymers

Regalite® R 1100    hydriertes C9-Harz mit einem Erweichungspunkt von ca. 100°C, Eastman Chemicals

Escorez 5600®    cycloaliphatisches hydriertes Harz mit einem Erweichungspunkt von ca. 100°C-106°C, ExxonMobil Chemical

Shellflex® 371    naphthenisches Öl, Shell

Kristalex® 1140    reines Aromatenharz als Endblockverstärker mit einem Erweichungspunkt von ca. 140°C, Eastman

Herstellung des Beispiels Referenz 5:

Für die Polymerisation wurden von Stabilisatoren gereinigte Monomere eingesetzt. Ein für radikalische Polymerisationen konventioneller 2 L-Glasreaktor wurde mit 32 g Acrylsäure, 168 g n-Butylacrylat, 200 g 2-Ethylhexylacrylat, und 300 g Aceton/Isopropanol (97:3) befüllt. Nach 45 Minuten Durchleiten von Stickstoffgas unter Rühren wurde der Reaktor auf 58°C hochgeheizt und 0,2 g Vazo67® (Fa. DuPont, 2,2'-Azodi(2-methylbutyronitril)) hinzugegeben. Anschließend wurde das äußere Heizbad auf 75°C erwärmt und die Reaktion konstant bei dieser Außentemperatur durchgeführt. Nach 1 h Reaktionszeit wurde wiederum 0,2 g Vazo 67® (Fa. DuPont, 2,2'-Azodi(2-methylbutyronitril)) hinzugegeben. Nach 3 h und 6 h wurde mit jeweils 150 g Aceton/Isopropanol Gemisch verdünnt. Zur Reduktion der Restinitiatoren wurden nach 8 h und nach 10 h jeweils 0,1 g Perkadox 16® (Fa. Akzo Nobel, Di(4-tert-butylcyclohexyl) peroxydicarbonat) hinzugegeben. Die Reaktion wurde nach 22 h Reaktionszeit abgebrochen und auf Raumtemperatur abgekühlt. Anschließend wurde auf einen Feststoffgehalt von 30 % mit Isopropanol verdünnt und unter starkem Rühren 0,3 Gew.-% Aluminiumacetylacetonat hinzugegeben. Die Lösung wurde dann analog zu den Beispielen 1 - 3 auf einer Trennfolie ausgestrichen und 10 Minuten bei 120°C getrocknet. Der Masseauftrag betrug 50 g/m$^2$.

## Ergebnisse

Nach der Prüfmusterherstellung wurden zunächst von allen Beispielen und Vergleichsbeispielen der Brechungsindex nach Testmethode A bestimmt. Die Ergebnisse sind in Tabelle 2 zusammengefasst.

| Tabelle 2 | |
|---|---|
| Beispiel | Brechungsindex (Test A) |
| 1 | 1,54 |
| 2 | 1,56 |
| 3 | 1,55 |
| Referenz 4 (R4) | 1,54 |
| Referenz 5 (R5) | 1,47 |

Aus den gemessenen Werten geht hervor, dass die Beispiele 1-3 den Zielbereich für den Brechungsindex von größer 1,49 erreicht haben. Die Werte schwanken - je nach aromatischen Hartblockanteil - zwischen 1,54 und 1,56. Das Referenzmuster auf Basis unmodifizierter Blockcopolymere, Referenz 4, zeigt ebenfalls einen relativ hohen Brechungsindex von 1,54. Das Referenzbeispiel R5 auf Polyacrylatbasis hat dagegen einen deutlich reduzierten Brechungsindex von 1,47.

Im folgenden Schritt wurden von allen Beispielen und Referenzbeispielen die Sofortklebkräfte auf Glas bestimmt. Hierbei wurde im 180° Winkel gemessen. In der folgenden Tabelle 3 sind die Ergebnisse dargestellt.

| Tabelle 3 | |
|---|---|
| Beispiel | Klebkraft (Test B) |
| 1 | 3,9 N/cm |
| 2 | 5,3 N/cm |

(fortgesetzt)

| Tabelle 3 | |
|---|---|
| Beispiel | Klebkraft (Test B) |
| 3 | 4,4 N/cm |
| R4 | 4,2 N/cm |
| R5 | 6,4 N/cm |

Tabelle 3 kann entnommen werden, dass alle Beispiele 1-3 zur permanenten Verklebung geeignet sind. Die Referenzbeispiele R4 und R5 zeigen ebenfalls sehr hohe Sofortklebkräfte auf Glas.

Zur weiteren optischen Bestimmung wurden von allen erfinderischen Beispielen und Vergleichsbeispielen Transmissions- und Haze-Messungen durchgeführt. Die Ergebnisse sind in Tabelle 4 aufgelistet.

| Tabelle 4 | | |
|---|---|---|
| Beispiel | Transmission (Test C) | Haze (Test D) |
| 1 | 92% | 0,4% |
| 2 | 92% | 0,7%. |
| 3 | 92% | 0,4% |
| R4 | 92% | 0,5% |
| R5 | 93% | 0,4% |

Tabelle 4 kann entnommen werden, dass alle Beispiele eine wasserklare Transparenz aufweisen und somit auch eine hohe Transmission. Bei der Messung liegt die Transmission bei ca. 92 bis 93 %, begrenzt jeweils durch Reflektionsverluste durch den Übergang von Luft zur Klebmasse. Diese Ergebnisse werden noch einmal durch die Messungen der Haze-Werte bestätigt. Auch hier wurden in allen Fällen Haze-Werte unterhalb 1 % gemessen.

Im Folgenden wurden weiterhin verschiedene Alterungsuntersuchungen durchgeführt. Als erstes wurde ein Lichtbeständigkeitstest nach Prüfmethode E durchgeführt. Hier wird überprüft, ob durch lange Sonnenlichtbestrahlung eine Verfärbung oder Vergilbung eintritt. Dies ist besonders wichtig für optische Anwendungen, die einer Dauerbestrahlung, wie z.B. durch ein Display, ausgesetzt sind oder im Außenbereich eingesetzt werden. Die Ergebnisse sind in Tabelle 5 zusammengefasst.

| Tabelle 5 | |
|---|---|
| Beispiel | Transmission nach Lichtbeständigkeitstest (Test E) |
| 1 | 89 % |
| 2 | 90 % |
| 3 | 90 % |
| R 4 | 89 % |
| R 5 | 91 % |

Tabelle 5 kann entnommen werden, dass alle Beispiele und Referenzbeispiele eine stabile Transmission aufweisen und keinen oder aber einen nur sehr geringen Abfall in der Transmission nach dem Lichtbeständigkeitstest.

Ein weiterer Alterungstest umfasst eine Wechselklimaprüfung. Hier wird die Situation simuliert, dass die Klebemasse einem sehr unterschiedlichen Klima ausgesetzt wird, was beispielsweise der Fall sein kann für Endanwendungen im Mobiletelefonbereich. Der Wechselklimatest wurde nach Prüfmethode F durchgeführt. Die Ergebnisse sind in Tabelle 6 dargestellt.

| Tabelle 6 | |
|---|---|
| Beispiel | Klebkraft nach Wechselklimalagerung (Test F) |
| 1 | 4,3 N/cm |
| 2 | 5,0 N/cm |
| 3 | 4,2 N/cm |
| R 4 | 1,2 N/cm* |
| R 5 | 6,9 N/cm |
| *Beispiel bricht kohäsiv im Klebkraft-Test | |

Die Messungen aus Tabelle 6 verdeutlichen, dass das Vergleichsbeispiel R 4 sehr geringe Verklebungsfestigkeiten zeigt. Die Masse hat die Temperaturbelastung im Klimawechseltest nicht unverändert überstanden und ist somit nicht geeignet für die Verwendung im Consumgüterelektronikbereich. Die restlichen Beispiele zeigen dagegen ein stabiles Klebkraftverhalten.

Als letzte Messung wurde noch einmal mit allen Beispielen und Vergleichsbeispielen ein Verlust der Oberflächenleitfähigkeit über einen längeren Zeitraum gemessen. Hiermit wird simuliert, ob Alterungseffekte auftreten, die die elektrische Leitfähigkeit negativ beeinflussen. Der Verlust (in Prozent) wird durch den Vergleich einer Messung des Verbundes vor und nach einer Lagerung bestimmt (Messmethode G). Für Touch Panel Anwendungen sind Verluste von kleiner 5 % erforderlich, um eine gute Eignung zu besitzen. Die Ergebnisse zu diesen Untersuchungen sind in Tabelle 7 zusammengefasst.

| Tabelle 7 | |
|---|---|
| Beispiel | Oberflächenleitfähigkeit Verlust in [%] (Test G) |
| 1 | 3,9 |
| 2 | 4,6 |
| 3 | 4,0 |
| R 4 | 4,2 |
| R 5 | 15,4 |

Die Messergebnisse zeigen, dass das Vergleichsbeispiel R 5 einen deutlichen Abfall der elektrischen Leitfähigkeit zeigt. Referenzbeispiel 5 basiert auf einem Polyacrylat und enthält Acrylsäuregruppen. Dagegen zeigen die Beispiele 1 bis 3 sowie das Referenzbeispiel 4 einen nur sehr geringen Verlust in der Oberflächenleitfähigkeit.

Zusammenfassend zeigen die Messergebnisse, dass nur sehr bestimmte Haftklebemassen mit sehr definierten Klebmassenformulierungen alle Anforderungen erfüllen können. Die Beispiele 1-3 sind somit sehr gut geeignet, für optische Anwendungen eingesetzt zu werden. Typische Anwendungen sind die Verklebung von Touch Panels oder die Verklebung von ITO-Folien für kapazitive Touch Panels.

**Patentansprüche**

1. Verwendung einer Klebemasse mindestens enthaltend ein säureanhydridmodifiziertes Vinylaromatenblockcopolymer, ein Metallchelat sowie ein Klebharz für die Verklebung optischer Bauteile, insbesondere optischen Folien, wobei die Klebemasse eine Transmission größer 86 % und einen Haze kleiner 5 % aufweist.

2. Verwendung nach Anspruch 1, **dadurch gekennzeichnet,**
   **dass** die Klebemasse eine Haftklebemasse ist.

3. Verwendung nach Anspruch 1 oder 2, **dadurch gekennzeichnet,**
   **dass** das Metallchelat folgender Formel entspricht:

$$(R_1O)_n \, M \, (XR_2Y)_m$$

wobei

M ein Metall ist,
$R_1$ eine Alkyl- oder Arylgruppe ist, insbesondere Methyl, Ethyl, Butyl, Isopropyl oder Benzyl,
n Null oder eine ganze Zahl größer Null ist (n ≥ 0),
X Sauerstoff oder Stickstoff ist,
Y Sauerstoff oder Stickstoff ist,

wobei auch X = Y möglich ist und
wobei X und/oder Y durch eine Doppelbindung an $R_2$ gebunden sein kann;

$R_2$ eine X und Y verbindende Alkylengruppe ist,

wobei die Alkylengruppe verzweigt sein kann, oder auch Sauerstoff und/oder weitere Heteroatome in der Kette enthalten kann;

m eine ganze Zahl, mindestens jedoch 1 ist (m ≥ 1).

4. Verwendung nach einem der vorhergehenden Ansprüche, **dadurch gekennzeichnet, dass** das Metall des Metallchelats ausgewählt ist aus der 2., 3., 4. und 5. Hauptgruppe des Periodensystems sowie den Übergangsmetallen, vorzugsweise, dass das Metall des Metallchelats Aluminium ist.

5. Verwendung nach einem der vorhergehenden Ansprüche, **dadurch gekennzeichnet, dass** das säureanhydridmodifizierte Vinylaromatenblockcopolymer ein Blockcopolymer gebildet von Vinylaromaten (A-Blöcke) und solchen gebildet durch Polymerisation von 1,3-Dienen (B-Blöcke) ist.

6. Verwendung nach einem der vorhergehenden Ansprüche, **dadurch gekennzeichnet, dass** die Klebemasse einen Anteil von mindestens 20 Gew.-%, vorzugsweise von mindestens 30 Gew.-%, weiter vorzugsweise von mindestens 35 Gew.-% von Vinylaromatenblockcopolymer aufwelst, und/oder **dass** Selbige einen Anteil von maximal 70 Gew.-%, vorzugsweise von maximal 60 Gew.-%, weiter vorzugsweise von maximal 55 Gew.-% von Vinylaromatenblockcopolymer aufweist.

7. Verwendung nach einem der vorhergehenden Ansprüche, **dadurch gekennzeichnet, dass** der Anteil an Säureanhydrid zwischen 0,5 Gew.-% und 4 Gew.-% bezogen auf das gesamte Blockcopolymer beträgt.

8. Verwendung nach einem der vorhergehenden Ansprüche, **dadurch gekennzeichnet, dass** die Klebemasse einen pH-Wert im Bereich von ph 6 bis pH 8 aufweist.

9. Verwendung nach einem der vorhergehenden Ansprüche, **dadurch gekennzeichnet, dass** das optische Bauteil elektrisch leitfähig ist.

## Claims

1. Use of an adhesive at least comprising an acid anhydride-modified vinylaromatic block copolymer, a metal chelate, and a tackifier resin, for the bonding of optical components, more particularly optical films, the adhesive having a transmittance of greater than 86% and a haze of less than 5%.

2. Use according to Claim 1, **characterized in that** the adhesive is a pressure-sensitive adhesive.

3. Use according to Claim 1 or 2, **characterized in that** the metal chelate conforms to the following formula:

$$(R_1O)_n \, M \, (XR_2Y)_m$$

where

M is a metal,
$R_1$ is an alkyl or aryl group, more particularly methyl, ethyl, butyl, isopropyl or benzyl,
n is zero or an integer greater than zero ($n \geq 0$),
X is oxygen or nitrogen,
Y is oxygen or nitrogen,

where X = Y is also possible and
where X and/or Y may be bonded to $R_2$ by a double bond;

$R_2$ is an alkylene group joining X and Y,

where the alkylene group may be branched, or else may contain oxygen and/or further heteroatoms in the chain;

m is an integer, but is at least 1 ($m \geq 1$).

4. Use according to any of the preceding claims, **characterized in that** the metal of the metal chelate is selected from main groups 2, 3, 4, and 5 of the Periodic Table and also the transition metals, preferably **in that** the metal of the metal chelate is aluminum.

5. Use according to any of the preceding claims, **characterized in that** the acid anhydride-modified vinylaromatic block copolymer is a block copolymer formed of vinylaromatic (A blocks) and those formed by polymerization of 1,3-dienes (B blocks).

6. Use according to any of the preceding claims, **characterized in that** the adhesive has a fraction of at least 20%, preferably of at least 30%, more preferably of at least 35% by weight of vinylaromatic block copolymer, and/or **in that** the same has a fraction of not more than 70%, preferably of not more than 60%, more preferably of not more than 55% by weight of vinylaromatic block copolymer.

7. Use according to any of the preceding claims, **characterized in that** the fraction of acid anhydride is between 0.5% and 4% by weight, based on the overall block copolymer.

8. Use according to any of the preceding claims, **characterized in that** the adhesive has a pH in the range from pH 6 to pH 8.

9. Use according to any of the preceding claims, **characterized in that** the optical component is electrically conductive.

**Revendications**

1. Utilisation d'une matière adhésive au moins contenant un copolymère à blocs vinylaromatiques, modifié avec un anhydride d'acide, un chélate métallique ainsi qu'une résine collante, pour le collage de composants optiques, en particulier de films optiques, la matière adhésine présentant une transmission supérieure à 86 % et un voile inférieur à 5 %.

2. Utilisation selon la revendication 1, **caractérisée en ce que** la matière adhésive est une matière autoadhésive.

3. Utilisation selon la revendication 1 ou 2, **caractérisée en ce que** le chélate métallique correspond à la formule suivante :

$$(R_1O)_n \, M \, (XR_2Y)_m$$

dans laquelle

M est un métal,
$R_1$ est un groupe alkyle ou aryle, en particulier méthyle, éthyle, butyle, isopropyle ou benzyle,
n est zéro ou un nombre entier supérieur à zéro ($n \geq 0$),
X est un atome d'oxygène ou d'azote,

Y est un atome d'oxygène ou d'azote,

X = Y étant également possible et
X et/ou Y pouvant être lié(s) par une double liaison à $R_2$ ;

$R_2$ est un groupe alkylène reliant X et Y ;

le groupe alkylène pouvant être ramifié, ou pouvant également contenir de l'oxygène et/ou d'autres hétéroatomes dans la chaîne ;

m est un nombre entier, mais égal au moins à 1 (m ≥ 1).

**4.** Utilisation selon l'une quelconque des revendications précédentes, **caractérisée en ce que**
le métal du chélate métallique est choisi dans les groupes IIA, IIIA, IVA et VA du système périodique ainsi que parmi les métaux de transition,
de préférence le métal du chélate métallique est l'aluminium.

**5.** Utilisation selon l'une quelconque des revendications précédentes, **caractérisée en ce que**
le copolymère à blocs vinylaromatiques, modifié avec un anhydride d'acide, est un copolymère à blocs constitué de blocs vinylaromatiques (blocs A) et de ceux formés par polymérisation de 1,3-diènes (blocs B).

**6.** Utilisation selon l'une quelconque des revendications précédentes, **caractérisée en ce que**
la matière adhésive présente une proportion d'au moins 20 % en poids, de préférence d'au moins 30 % en poids, encore mieux d'au moins 35 % en poids de copolymère à blocs vinylaromatiques, et/ou
celle-ci présente une proportion d'au maximum 70 % en poids, de préférence d'au maximum 60 % en poids, encore mieux d'au maximum 55 % en poids de copolymère à blocs vinylaromatiques.

**7.** Utilisation selon l'une quelconque des revendications précédentes, **caractérisée en ce que**
la teneur en anhydride d'acide est comprise entre 0,5 % en poids et 4 % en poids, par rapport au copolymère à blocs total.

**8.** Utilisation selon l'une quelconque des revendications précédentes, **caractérisée en ce que**
la matière adhésive présente un pH dans la plage de pH 6 à pH 8.

**9.** Utilisation selon l'une quelconque des revendications précédentes, **caractérisée en ce que**
le composant optique est conducteur de l'électricité.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6703463 B2
- JP 2002363523 A
- US 20020098352 A1
- EP 1652889 A1
- EP 1211298 A
- US 2008090036 A
- EP 1857515 A
- US 6653408 B
- US 3970608 A

**In der Beschreibung aufgeführte Nicht-Patentliteratur**

- **PEDROTTI ; PEDROTTI ; BAUSCH ; SCHMIDT.** Optik. 1996